# EUROPEAN PATENT APPLICATION

(11) **EP 4 528 334 A1**
(43) Date of publication of application: **26.03.2025**
(21) Application number: 23198620.9
(22) Date of filing: 20.09.2023
(51) Int. Cl.: G01T 1/04

(54) **COMPOSITION FOR RADIATION DOSIMETRY AND USES THEREOF**

(71) Applicant: King Faisal Specialist Hospital & Research Centre, Riyadh, 11211 (SA)
(72) Inventor: MOFTAH, Belal, Riyadh 1121 (SA); RABAEH, Khalid A., Riyadh 1121 (SA); MOUSSA, Akram A., Riyadh 1121 (SA); BANI ISSA, Abdullah S., Riyadh 1121 (SA)
(74) Representative: Engelhard, Markus

(57) **Abstract**

The present invention relates to a composition for radiation dosimetry and to a use of the composition in radiation dosimetry, such as in radiotherapy treatment verification. The present invention further relates to a method of determining a three-dimensional radiation dose distribution. The present invention also relates to a method of preventing or treating cancer, particularly to a radiotherapy treatment of cancer patients. Furthermore, the present invention relates to a method of preparing a composition for radiation dosimetry.

## Description

### FIELD OF THE INVENTION

The present invention relates to a composition for radiation dosimetry and to a use of the composition in radiation dosimetry, such as in radiotherapy treatment verification. The present invention further relates to a method of determining a three-dimensional radiation dose distribution. The present invention also relates to a method of preventing or treating cancer, particularly to a radiotherapy treatment of cancer patients. Furthermore, the present invention relates to a method of preparing a composition for radiation dosimetry.

### BACKGROUND OF THE INVENTION

High-precision techniques in radiotherapy aim to give three-dimensional high radiation doses to tumor tissue and spare the surround organs at the same time. Nowadays, the conventional way to achieve this aim is to utilize several one dimensional (1D) dosimeters such as ion chambers, thermoluminescent detectors (TLD), diode detectors, or two dimensional (2D) film dosimeters and 2D arrays. However, these methods are complicated and produce errors with respect to the 3D dose distribution. Therefore, polymer gel dosimeters have been developed which provide a better spatial resolution (3D) dosimetry for radiotherapy treatment verification. Gel dosimeters can be irradiated by different ionizing radiation sources that are used in radiotherapy units and their dose response can be evaluated by 1D methods, for instance spectrophotometers, and nuclear magnetic resonance (NMR), or in 2D using a charge-coupled device (CCD) camera.

Over three decades, various types of gel dosimeters were reported containing different types of monomers. One type of polymer gel is called anoxic polymer gel where the deoxygenation process was performed by bubbling the solution with nitrogen gas, wherein acrylamide was used as monomer, N,N'-methylenebisacrylamide (BIS) as crosslinking agent, and gelatin as a matrix media. To reduce the complexity of preparing the gel under nitrogen environment, an advanced composition of polymer gel based on methacrylic acid monomer was prepared under a normal environment. This type of polymer gel is called normoxic polymer gel. The deoxygenation process was performed using ascorbic acid as antioxidant agent.

Mattea et al. [1] reported a polymeric dosimeter based on itaconic acid monomer. The gel was irradiated to high doses using a dose rate ranging from 158 to 298 cGy/min. The dose response was evaluated using Raman spectroscopy utilizing the changes in chemical differences inside the irradiated gel. The results showed that the dose response of this type of polymer dosimeter was strongly dependent on dose rate change. Rabaeh et al. [2] introduced a normoxic composition of N-(hydroxymethyl)acrylamide (NHMA) polymer gel dosimeter for radiotherapy applications. The gel was evaluated after irradiation by NMR relaxometer and ultraviolet-visible (UV-Vis) spectrophotometer.

There remains the need for compositions which may be used as dosimeters for radiation dosimetry, particularly three-dimensional (3D) radiation dosimetry; particularly, there remains the need for compositions which have a high radiation dose sensitivity. Furthermore, there remains the need for compositions which allow to reliably determine dose distributions in the three-dimensional space. There also remains the need for hydrogel dosimeters with reduced toxicity. There further remains the need for hydrogel dosimeters which are easy to handle, e.g. which may be stored at room temperature and/or which do not necessitate an hypoxic environment. Moreover, there remains the need for compositions for radiation dosimetry which exhibit a high dose response and a wide linearity dose range response. There is also the need to provide means which allow for an accurate quantification of the radiation dose. Furthermore, there is the need to enhance the quality of radiation treatment, particularly radiotherapy, by providing means that allow for enhanced radiation treatment planning.

### SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to a composition, preferably hydrogel composition, for radiation dosimetry, comprising
polyvinyl alcohol,
glutaraldehyde,
acrylic acid, and
N,N'-methylenebisacrylamide;

wherein, preferably, said composition comprises an antioxidant, preferably tetrakis(hydroxymethyl)phosphonium chloride;
wherein, optionally, said composition comprises magnesium chloride and/or glucose.

In one embodiment, said composition comprises
polyvinyl alcohol,
glutaraldehyde,
acrylic acid,
N,N'-methylenebisacrylamide,
water, and
an antioxidant, preferably tetrakis(hydroxymethyl)phosphonium chloride;
wherein, optionally, said composition comprises magnesium chloride and/or glucose.

In one embodiment, said composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%; and/or water in an amount in a range of from 40 wt% to 95 wt%, preferably in a range of from 60 wt% to 90 wt%, more preferably in a range of from 64 wt% to 84 wt%.

In one embodiment, said composition comprises
magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%; or
glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

In one embodiment, said composition comprises
- water in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%; or
- water in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

In one embodiment, said composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%;
water in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%;
or said composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%;
water in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

In one embodiment, said composition is a hydrogel dosimeter composition; and/or said composition is formulated as a tissue-equivalent dosimeter.

In one embodiment, said composition does not comprise iron, particularly does not comprise ferrous ions; and/or wherein said composition does not comprise gelatin.

In a further aspect, the present invention relates to a use of a composition as defined herein in radiation dosimetry, preferably in three-dimensional radiation dosimetry, more preferably in radiation treatment planning, wherein said use is an in vitro and/or ex vivo use.

In a further aspect, the present invention relates to a method of using a composition as defined herein in radiation dosimetry, preferably in three-dimensional radiation dosimetry, more preferably in radiation treatment planning, wherein said method comprises contacting said composition as defined herein with ionizing radiation and determining a radiation dose absorbed by said composition.

In a further aspect, the present invention relates to a method of determining a three-dimensional radiation dose distribution, preferably a method of radiation treatment planning, particularly a method of radiation treatment planning verification, comprising
i) providing a composition as defined herein;
ii) optionally, analyzing a polymerization degree of said composition;
iii) irradiating said composition, preferably using ionizing radiation, more preferably using X-rays; preferably to a dose in a range of from 0.5 Gy to 60 Gy; optionally using a medical linear accelerator;
iv) analyzing a polymerization degree of said composition;
wherein, preferably, said analyzing a polymerization degree comprises nuclear magnetic resonance spectroscopy, optical computed tomography, X-ray computed tomography, ultraviolet-visible spectroscopy, magnetic resonance imaging, ultrasound, and/or Raman spectroscopy.

In one embodiment, said analyzing a polymerization degree comprises analyzing a magnetic property of said composition, preferably using nuclear magnetic resonance spectroscopy, more preferably analyzing a relaxation rate of said composition using nuclear magnetic resonance spectroscopy, and/or comprises analyzing an optical property of said composition, preferably using ultraviolet-visible spectroscopy, more preferably analyzing an absorbance intensity of said composition using ultraviolet-visible spectroscopy.

In one embodiment, said determining a three-dimensional radiation dose distribution comprises determining a dose response of said composition by analyzing a change in a relaxation rate of said composition using nuclear magnetic resonance spectroscopy, and/or by analyzing a change in an absorbance intensity of said composition using ultraviolet-visible spectroscopy;
wherein, preferably, said change is analyzed by comparing a relaxation rate and/or an absorbance intensity of said composition determined after irradiating said composition in step iii) to a relaxation rate and/or an absorbance intensity of a reference value and/or reference sample or to a relaxation rate and/or an absorbance intensity of said composition determined prior to irradiating said composition in step iii).

In one embodiment, said irradiating in step iii) is performed
at a dose rate in a range of from 10 cGy/min to 3000 cGy/min, preferably in a range of from 100 cGy/min to 800 cGy/min, more preferably in a range of from 200 cGy/min to 700 cGy/min, e.g. about 600 cGy/min; and/or
at a radiation beam energy in a range of from 1 MV to 25 MV, preferably in a range of from 4 MV to 15 MV, more preferably in a range of from 6 MV to 10 MV, e.g. about 6 MV.

In a further aspect, the present invention relates to a method of preventing or treating cancer, comprising
i) planning and/or verifying a radiation treatment comprising radiation dosimetry using a composition as defined herein; wherein, preferably, said planning and/or verifying comprises performing a method of determining a three-dimensional radiation dose distribution as defined herein;
ii) subjecting a patient in need thereof to said radiation treatment, preferably to radiotherapy.

In a further aspect, the present invention relates to a method of preparing a composition for radiation dosimetry, preferably a composition as defined herein, more preferably a hydrogel dosimeter composition, comprising
a) providing a solution comprising polyvinyl alcohol, optionally comprising magnesium chloride or glucose; wherein, optionally, said providing comprises providing water, optionally comprising magnesium chloride or glucose, wherein said water has a temperature in a range of from 70°C to 90°C, preferably in a range of from 75°C to 85°C, more preferably of about 80°C, and adding said polyvinyl alcohol thereto;
b) optionally, adjusting a temperature of said solution provided in step a) to a temperature in a range of from 40°C to 60°C, preferably to a temperature in a range of from 45°C to 55°C, more preferably to about 50°C;
c) adding N,N'-methylenebisacrylamide to said solution of step a) or b) to obtain a mixture comprising N,N'-methylenebisacrylamide;
d) optionally, adjusting a temperature of said mixture of step c) to a temperature in a range of from 30°C to 50°C, preferably in a range of from 35°C to 45°C, more preferably to about 40°C;
e) adding, optionally consecutively, acrylic acid, glutaraldehyde, and tetrakis(hydroxymethyl)phosphonium chloride.

In a further aspect, the present invention relates to a composition as defined herein for use in medicine; preferably for use in radiotherapy such as for use in a method of preventing or treating cancer; more preferably for use in radiation treatment planning, particularly for use in radiation treatment planning verification. In one embodiment, said method of preventing or treating cancer, said radiation treatment planning, and said radiation treatment planning verification are as defined herein.

In one embodiment, the composition for use is a composition for use in a method of preventing or treating cancer, wherein said method of preventing or treating cancer comprises
i) planning and/or verifying a radiation treatment comprising radiation dosimetry using a composition as defined herein; wherein, preferably, said planning and/or verifying comprises performing a method of determining a three-dimensional radiation dose distribution as defined herein;
ii) subjecting a patient in need thereof to said radiation treatment, preferably to radiotherapy.

In a further aspect, the present invention relates to a use of a composition as defined herein for the manufacture of a dosimeter, particularly hydrogel dosimeter, for radiotherapy such as for a method of preventing or treating cancer, particularly for radiation treatment planning such as radiation treatment planning verification.

### DETAILED DESCRIPTION

The composition of the invention changes its material properties, such as magnetic properties and optical properties, in response to radiation, and thus can be used as polymer-based dosimeter. Advantageously, the spatial resolution of the composition of the invention is very high, and the composition allows for measuring the radiation dose distributions in the three-dimensional space. The composition of the invention may be provided as a polymeric hydrogel dosimeter, particularly as a tissue-equivalent polymeric hydrogel dosimeter.

For example, the composition of the invention may be a medical radiation tissue-equivalent dosimetry composition to be used as polymeric hydrogel dosimeter, which provides an accurate measurement of 3D dose distributions of ionizing radiation, thereby ensuring the quality of radiotherapy treatment for cancer patients. Particularly, the composition of the invention may be used as a dosimeter for quality assurance in radiotherapy. Advantageously, the composition may be used as a 3D tool for the verification of treatment plans for patients undergoing radiotherapy treatment. More than 50% of cancer patients require radiotherapy as part of cancer care. Quality assurance is a critical tool in the prevention of errors and in giving high confidence that patients will receive the prescribed radiation treatment correctly. A new chemical dosimeter composition containing radiosensitive monomers is herein described for quality assurance in medical radiation dosimetry. The composition of the invention, e.g. a polymeric hydrogel dosimeter, contains acrylic acid monomer which polymerizes gradually with an increase in the absorbed dose, e.g. an increase up to 60 Gy. The composition, e.g. hydrogel, may be a gelatinous substance and can be stored in room temperature before and after irradiation, while the conventional polymer gels have to be stored in low temperature to keep them from melting. As described herein, the dose response of the composition of the invention was investigated, for example, in terms of the changes in the relaxation rate (R2) and absorbance intensity. It was found that the linear dose range of the composition, e.g. hydrogel dosimeter, was very wide (e.g. 0-30 Gy) compared to the conventional polymer gels. Advantageously, the results show no significant changes in the dose response of the irradiated hydrogel dosimeters under different dose rates or beam energies.

Particularly, the present invention relates to a composition for radiation dosimetry, comprising polyvinyl alcohol, glutaraldehyde, acrylic acid, and N,N'-methylenebisacrylamide; wherein, preferably, said composition comprises an antioxidant, preferably tetrakis(hydroxymethyl)phosphonium chloride; wherein, optionally, said composition comprises magnesium chloride and/or glucose. For example, the term "for radiation dosimetry", as used herein in the context of the composition, is meant to be understood as referring to the composition being suitable for radiation dosimetry, e.g. being suitable to be used as dosimeter for radiation dosimetry, preferably being suitable for radiotherapy treatment verification. For example, said radiation dosimetry may relate to a radiation dosimetry for radiotherapy treatment verification. In a preferred embodiment, the composition is a hydrogel. In one embodiment, said composition comprises polyvinyl alcohol, glutaraldehyde, acrylic acid, N,N'-methylenebisacrylamide, and water; wherein, preferably, said composition comprises an antioxidant, preferably tetrakis(hydroxymethyl)phosphonium chloride, and/or comprises magnesium chloride and/or glucose. In one embodiment, said composition comprises polyvinyl alcohol, glutaraldehyde, acrylic acid, N,N'-methylenebisacrylamide, water, and an antioxidant, preferably tetrakis(hydroxymethyl)phosphonium chloride; wherein, preferably, said composition comprises magnesium chloride and/or glucose. In one embodiment, said composition comprises polyvinyl alcohol, glutaraldehyde, acrylic acid, N,N'-methylenebisacrylamide, water, an antioxidant such as tetrakis(hydroxymethyl)phosphonium chloride, and magnesium chloride and/or glucose. For example, said polyvinyl alcohol may be present in the composition of the invention in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%. For example, said glutaraldehyde may be present in the composition of the invention in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%. For example, said acrylic acid may be present in the composition of the invention in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%. For example, said N,N'-methylenebisacrylamide may be present in the composition of the invention in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%. For example, said antioxidant, preferably tetrakis(hydroxymethyl)phosphonium chloride, may be present in the composition of the invention in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%. For example, said water may be present in the composition of the invention in an amount in a range of from 40 wt% to 95 wt%, preferably in a range of from 60 wt% to 90 wt%, more preferably in a range of from 64 wt% to 84 wt%. For example, said magnesium chloride may be present in the composition of the invention in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%. For example, said glucose may be present in the composition of the invention in an amount in a range of from 0.1 wt% to 50 wt%, more preferably in an amount in a range of from 15 wt% to 35 wt%, even more preferably in an amount in a range of from 20 wt% to 30 wt%, such as about 25 wt%. For example, said water may be present in the composition of the invention in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and said magnesium chloride may be present in the composition of the invention in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%. For example, said water may be present in the composition of the invention in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and said glucose may be present in the composition of the invention in an amount in a range of from 0.1 wt% to 50 wt%, more preferably in an amount in a range of from 15 wt% to 35 wt%, even more preferably in an amount in a range of from 20 wt% to 30 wt%, such as about 25 wt%. Advantageously, the composition of the invention allows for an accurate quantification of the radiation dose. Particularly, the composition of the invention, e.g. in the form of a polymeric hydrogel dosimeter, allows for an accurate measurement of 3D dose distributions of ionizing radiation, thereby providing a means to ensure quality of radiotherapy for cancer patients.

The term "radiation dosimetry", as used herein, preferably relates to the assessment of a radiation dose, particularly an ionizing radiation dose, for example the three-dimensional distribution of an ionizing radiation dose, e.g. in radiotherapy treatment verification. The radiation dosimetry is preferably medical radiation dosimetry, such as medical radiation dosimetry for radiotherapy treatment verification. Medical dosimetry is the calculation of absorbed dose and optimization of dose delivery in radiation therapy. For example, radiation dosimetry may be performed as external dosimetry which is based on measurements with a dosimeter. Radiation dosimetry preferably includes determining a three-dimensional dose distribution, e.g. using gel dosimetry. Advantageously, the composition of the invention is suitable for radiation dosimetry, particularly three-dimensional radiation dosimetry, and the composition may be used for radiation treatment planning such as for radiotherapy treatment verification. Radiation dosimetry allows for ensuring the quality of a radiation treatment and allows for the radiation protection of the patient.

In one embodiment, the composition is a gel dosimeter, preferably a hydrogel dosimeter, particularly a hydrogel dosimeter for three-dimensional radiation dosimetry. A gel dosimeter typically undergoes a change in its properties, such as optical properties or magnetic properties, as a function of the absorbed radiation dose upon irradiation with ionizing radiation. Hydrogel dosimeters may be prepared by dissolving reactive monomers, e.g. containing carbon-carbon double bonds, in a matrix, e.g. a gel matrix. Polymerization of the monomers may be initiated by ionizing radiation, which results in changes in the physical and chemical properties, such as turbidity, density and absorbance. These changes are closely related to the dose absorbed by the dosimeter. Therefore, the absorbed dose value can be determined by analyzing these changes. Preferably, the composition of the invention is a normoxic hydrogel dosimeter.

The terms "N,N'-methylenebisacrylamide" and "N,N'-methylenedi(prop-2-enamide)", as used herein, may be used interchangeably. Glucose may be present in the form of D-(+)-glucose.

The term "antioxidant", as used herein, relates to an agent which scavenges oxygen, particularly which binds atmospheric oxygen, such as tetrakis(hydroxymethyl)phosphonium chloride. In a preferred embodiment, the antioxidant is tetrakis(hydroxymethyl)phosphonium chloride. Advantageously, by using an antioxidant, a normoxic composition may be produced. Normoxic compositions have the advantage that oxygen inhibition is avoided and that the preparation of the compositions on the benchtop in the laboratory is possible; accordingly, normoxic compositions are easy to handle. Advantageously, magnesium chloride and/or glucose may act as sensitizing agents in the composition of the invention and enhance(s) the performance of the dosimeter composition. For example, the sensitizing agent may enhance polymerization of acrylic acid and N,N'-methylenebisacrylamide.

In one embodiment, said composition comprises polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%. In one embodiment, said composition comprises glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%. In one embodiment, said composition comprises acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%. Advantageously, the composition of the invention comprising acrylic acid has a reduced toxicity compared to dosimeter compositions comprising acrylamide. In one embodiment, said composition comprises N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%. In one embodiment, said composition comprises an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%. In one embodiment, said composition comprises water in an amount in a range of from 40 wt% to 95 wt%, preferably in a range of from 60 wt% to 90 wt%, more preferably in a range of from 64 wt% to 84 wt%. In one embodiment, said composition comprises magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%. In one embodiment, said composition comprises glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%. In one embodiment, said composition comprises water in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%. In one embodiment, said composition comprises water in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%. The terms "amount" and "concentration", as used herein in the context of a composition of the invention, may be used interchangeably. Advantageously, the composition of the invention exhibits a high dose response, a wide linearity dose range response, and an independence on dose rate, radiation beam energy, and radiation beam direction.

The inventors have found that highly advantageous, particularly reliable, hydrogel dosimeters may be provided with the composition of the invention, for example if the composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%;
water in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and
magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%;
or if the composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%;
water in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and
glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

In one embodiment, the composition is a hydrogel dosimeter composition, particularly a polymeric hydrogel dosimeter composition. The term "hydrogel dosimeter", as used herein, relates to a dosimeter in the form of hydrogel. Advantageously, hydrogel dosimeters for measuring ionizing radiation doses may exhibit equivalence to living tissue and high biocompatibility. In one embodiment, said composition is formulated as a tissue-equivalent dosimeter. The term "tissue-equivalent dosimeter", as used herein, preferably relates to a dosimeter that has a sensitivity to ionizing radiation similar to that of human tissue; particularly to a dosimeter that has identical radiation characteristics and physical properties, when exposed to a defined energy range, as the tissue it represents. The composition of the invention may be provided in the form of a radiation-sensitive gel. In one embodiment, the composition comprises or consists of a hydrogel.

In one embodiment, the composition of the invention does not comprise iron, particularly does not comprise ferrous ions. In one embodiment, the composition of the invention is not a Fricke gel dosimeter. Advantageously, the composition of the invention has a reduced sensitivity to oxygen compared to Fricke gel dosimeters. Due to its reduced oxygen sensitivity, the composition of the invention may be efficiently produced without providing a hypoxic environment for the manufacturing. In one embodiment, the composition of the invention does not comprise gelatin. Advantageously, the composition of the invention provides a tissue-equivalent ionizing radiation dose response.

In one embodiment, the composition is provided in the form of a kit, comprising said composition and optionally comprising a dosimeter phantom. In one embodiment, the composition is provided in the form of a device, preferably a dosimeter phantom, comprising a gel dosimeter comprising or consisting of the composition of the invention.

The present invention also relates to a use of a composition of the invention in radiation dosimetry, preferably in three-dimensional (3D) radiation dosimetry, more preferably in radiation treatment planning such as radiation treatment planning verification, wherein said use is an in vitro and/or ex vivo use. The term "three-dimensional radiation dosimetry", as used herein, preferably relates to radiation dosimetry with resolution in the three-dimensional space, particularly to radiation dosimetry for measuring the three-dimensional dose distribution. The term "radiation treatment planning", as used herein, preferably relates to planning and/or verifying the appropriate external beam radiotherapy or internal brachytherapy treatment technique, particularly planning and/or verifying the dose, for a patient such as a cancer patient. In one embodiment, said radiation treatment planning comprises planning a radiation treatment and verifying said planned radiation treatment, particularly by using a composition of the invention as a dosimeter. Radiation treatment planning is typically performed prior to subjecting a patient to radiotherapy. Radiation treatment planning typically includes radiation treatment planning verification. In one embodiment, the composition of the invention is used for radiation treatment planning verification. In one embodiment, the method of determining a three-dimensional radiation dose distribution is or is part of a method of radiation treatment planning verification. In one embodiment, the composition of the invention is a 3D dosimeter. A 3D dosimeter may be able to deliver a 3D dosimetric analysis of a treatment plan with 1 mm isotropic spatial resolution, within 1 hour, with an accuracy of within 3% of the true value, with 1% precision.

Advantageously, the composition of the invention allows for three-dimensional radiation dosimetry with 1 mm isotropic spatial resolution, within 1 hour, with an accuracy of within 3% of the true value, and with 1% precision. The present invention also relates to a method of using a composition as defined herein in radiation dosimetry, preferably in three-dimensional radiation dosimetry, more preferably in radiation treatment planning, wherein said method comprises contacting said composition as defined herein with ionizing radiation and determining a radiation dose absorbed by said composition. In one embodiment, said method of using a composition of the invention comprises or consists of a method of determining a three-dimensional radiation dose distribution of the invention; for example, said method of using may comprise steps i)-iv) of said method of determining a three-dimensional radiation dose distribution. In one embodiment, said method of using a composition of the invention is a method of using said composition in vitro and/or ex vivo.

The present invention also relates to a method of determining a three-dimensional radiation dose distribution, preferably a method of radiation treatment planning, particularly a method of radiation treatment planning verification, comprising
i) providing a composition of the invention;
ii) optionally, analyzing a polymerization degree of said composition;
iii) irradiating said composition, preferably using ionizing radiation, more preferably using X-rays; preferably to a dose in a range of from 0.5 Gy to 60 Gy; optionally using a medical linear accelerator;
iv) analyzing a polymerization degree of said composition.

The term "three-dimensional radiation dose distribution", as used herein, relates to the radiation dose distribution in the three-dimensional space. The term "polymerization degree", as used herein, relates to the extent of polymerization of a composition. In one embodiment, the polymerization degree relates to the number of monomer units in a polymer. The terms "polymerization degree" and "degree of polymerization" may be used interchangeably. The polymerization degree analyzed in step iv) preferably corresponds to the absorbed dose, particularly the absorbed radiation dose. In one embodiment, an absorbed radiation dose is determined by analyzing the polymerization degree of said composition in step iv), wherein said polymerization degree corresponds to the absorbed dose. In one embodiment, said analyzing a polymerization degree, particularly in step ii), if present, and/or in step iv), comprises nuclear magnetic resonance spectroscopy, optical computed tomography, X-ray computed tomography, ultraviolet-visible spectroscopy, magnetic resonance imaging, ultrasound, and/or Raman spectroscopy. In one embodiment, said irradiating said composition in step iii) initiates polymerization of acrylic acid and N,N'-methylenebisacrylamide which results in the formation of poly(acrylic acid-co-N,N'-methylenebisacrylamide). Advantageously, due to the polymerization which corresponds to the absorbed dose, the three-dimensional radiation dose distribution may be analyzed. In one embodiment, the method of determining a three-dimensional radiation dose distribution is or is a part of a method of radiation dosimetry, preferably a method of radiation treatment planning. Radiation treatment planning verification may comprise determining whether a radiation dose, such as a prescribed radiation dose, is delivered in a desired three-dimensional distribution. For example, an aim of radiation treatment planning verification may be to check that the accuracy of the radiotherapy treatment is within the limits set by the uncertainty margin of the treatment plan. In one embodiment, a method of determining a three-dimensional radiation dose distribution comprises determining a radiation dose absorbed by said composition by analyzing a change in a relaxation rate of said composition using nuclear magnetic resonance spectroscopy, and/or by analyzing a change in an absorbance intensity of said composition using ultraviolet-visible spectroscopy. In one embodiment, a method of radiation treatment planning verification comprises performing a method of determining a three-dimensional radiation dose distribution and determining whether a radiation dose absorbed by said composition corresponds to a planned dose. In one embodiment, radiation treatment planning verification comprises verifying whether a three-dimensional radiation dose distribution absorbed by a composition corresponds to a planned three-dimensional radiation dose distribution.

In one embodiment, said analyzing a polymerization degree, particularly in step ii), if present, and/or in step iv), comprises analyzing a magnetic property of said composition, preferably using nuclear magnetic resonance spectroscopy, more preferably analyzing a relaxation rate of said composition using nuclear magnetic resonance spectroscopy, and/or comprises analyzing an optical property of said composition, preferably using ultraviolet-visible spectroscopy, more preferably analyzing an absorbance intensity of said composition using ultraviolet-visible spectroscopy.

The term "magnetic property", as used herein, relates to the magnetic characteristics of a composition, for example the atomic or subatomic response of the composition to an applied magnetic field wherein the electron spin and charge may create a dipole moment and a magnetic field, e.g. a NMR relaxation rate. In one embodiment, the magnetic property is a relaxation rate determined using nuclear magnetic resonance spectroscopy, such as a R2 relaxation rate. The term "relaxation rate", as used herein, preferably relates to a nuclear magnetic resonance relaxation rate. For example, the relaxation rate may be the inverse of the relaxation time T2. T2 is the time constant that measures the decay of the transverse relaxation. In a preferred embodiment, the relaxation rate is an R2 relaxation rate. The R2 relaxation is the reciprocal of the transverse time constant T2. The term "optical property", as used herein, relates to the characteristics of a composition with respect to its interaction with light, for example absorption or turbidity. In a preferred embodiment, the optical property of a composition is analyzed using ultraviolet-visible spectroscopy. In a preferred embodiment, the optical property is absorbance, preferably determined using ultraviolet-visible spectroscopy. In one embodiment, said analyzing a polymerization degree, particularly in step ii), if present, and/or in step iv), comprises analyzing an optical property of said composition, preferably using ultraviolet-visible spectroscopy, more preferably analyzing an absorbance of said composition using ultraviolet-visible spectroscopy. Changes in color and/or opacification may occur upon irradiation, thus allowing the use of optical tomography techniques to determine the dose distribution. The inventors have found that the polymerization induced by ionizing radiation results in a reduction of the T2 relaxation time (and a related increase of the relaxation rate R2 = 1/T2). Changes of optical properties are also observed in irradiated compositions of the invention.

In one embodiment, said determining a three-dimensional radiation dose distribution comprises determining a dose response of said composition by determining a change in a relaxation rate of said composition using nuclear magnetic resonance spectroscopy, and/or by determining a change in an absorbance intensity of said composition using ultraviolet-visible spectroscopy. In one embodiment, said change is analyzed by comparing a relaxation rate and/or an absorbance intensity of said composition determined after irradiating said composition in step iii) to a relaxation rate and/or an absorbance intensity of a reference value and/or reference sample or to a relaxation rate and/or an absorbance intensity of said composition determined prior to irradiating said composition in step iii).

In one embodiment, said analyzing a polymerization degree in step iv) comprises determining a three-dimensional radiation dose distribution by analyzing said polymerization degree and determining a change in said polymerization degree compared to a control, particularly compared to a reference value and/or reference sample or to a polymerization degree of said composition determined prior to irradiating said composition in step iii). In one embodiment, said analyzing a polymerization degree of said composition in step iv) comprises or consists of analyzing a physical change and/or a chemical change of said composition compared to a reference value and/or reference sample or to a polymerization degree of said composition determined prior to irradiating said composition in step iii).

In a preferred embodiment, an increase in the relaxation rate and/or absorbance intensity of said composition determined after irradiating said composition in step iii) compared to a relaxation rate and/or an absorbance intensity of a reference value and/or reference sample or compared to a relaxation rate and/or an absorbance intensity of said composition determined prior to irradiating said composition in step iii) corresponds to the absorbed dose, particularly the dose response.

The term "dose response", as used herein, preferably relates to the response of a composition, particularly a dosimeter composition, to a radiation dose such as an ionizing radiation dose. The dose response may include, for example, physical and/or chemical changes of the composition, such as changes in the magnetic properties and/or the optical properties of the composition. For example, the dose response may be investigated in terms of the changes in the relaxation rate (R₂) and/or absorbance intensity. The inventors have found that, advantageously, the linear dose range of the composition of the invention is very wide (e.g. 0-30 Gy) compared to conventional polymer gels that have similar dose sensitivity. Furthermore, the composition of the invention does not show significant changes in the dose response under different dose rates or beam energies. The term "dose rate", as used herein, relates to a quantity of radiation delivered per unit time. In one embodiment, said irradiating in step iii) is performed at a dose rate in a range of from 10 cGy/min to 3000 cGy/min, preferably in a range of from 100 cGy/min to 800 cGy/min, more preferably in a range of from 200 cGy/min to 700 cGy/min, e.g. about 600 cGy/min. In one embodiment, said irradiating in step iii) is performed at a radiation beam energy in a range of from 1 MV to 25 MV, preferably in a range of from 4 MV to 15 MV, more preferably in a range of from 6 MV to 10 MV, e.g. about 6 MV.

For the characterization of the response to ionizing radiations, dose resolution and sensitivity may be analyzed. The dose resolution is the minimum separation of two dose levels detectable with a certain level of confidence p, and represents the ability to distinguish two similar but distinct dose values. The sensitivity of dosimeters is defined as the slope of the linear region of the dose response curve. Since different regions of the composition may be exposed to different doses and dose rates, the response for 3D dose determinations should be independent of dose rate, since a dependence on the dose rate would lead to inaccurate dose maps. Advantageously, the composition of the invention has a high dose resolution and a high sensitivity, and may thus be used as 3D dosimeter.

The term "reference value and/or reference sample", as used herein, relates to a control which preferably reflect(s) the characteristics of a non-irradiated composition. For example, a reference value may be a value determined using a non-irradiated reference composition, wherein said reference composition has the same components and concentrations as the composition to be irradiated. For example, a reference sample may be a non-irradiated composition, wherein said composition has the same components and concentrations as the composition to be irradiated.

The present invention also relates to a method of preventing or treating cancer, comprising
i) planning and/or verifying a radiation treatment comprising radiation dosimetry using a composition as defined herein; particularly planning and/or verifying a radiation treatment, wherein said planning and/or verifying comprises performing radiation dosimetry using a composition as defined herein; wherein, preferably, said planning and/or verifying comprises performing a method as defined herein;
ii) subjecting a patient in need thereof to said radiation treatment, preferably to radiotherapy.

In one embodiment, the method of preventing or treating cancer is a method of radiotherapy. For example, the method of preventing or treating cancer may be a method of radiotherapy treatment of a cancer patient. In one embodiment, the cancer is a solid tumor. In one embodiment, the cancer is selected from sarcoma, brain cancer, breast cancer, pancreatic cancer, thyroid cancer, kidney cancer, ovarian cancer, cervical cancer, bladder cancer, uterine cancer, lung cancer, liver cancer, leukemia, prostate cancer, head and neck cancer, skin cancer, colon cancer, small intestine cancer, stomach cancer, pancreatic cancer, and rectal cancer. In one embodiment, the term "patient" relates to a human or an animal, preferably a human. In one embodiment, said method of preventing or treating cancer comprises radiation treatment planning verification, such as a method of radiation treatment planning verification as described herein; wherein, preferably, said method of preventing or treating cancer comprises radiation treatment planning verification prior to subjecting said patient to said radiation treatment such as to said radiotherapy.

The term "radiation treatment", as used herein, relates to a treatment using radiation, particularly ionizing radiation. Preferably, the radiation treatment is a radiotherapy. Radiation treatments aim at treating tumor tissue homogeneously with a planned dose while minimizing the dose to the surrounding healthy tissue. Inaccuracies in dose delivery during irradiation may result in either an insufficient dose to the tumor tissue or a high dose to the adjacent healthy tissue. Advantageously, by determining the 3D dose distribution in the composition of the invention before radiotherapy, inaccuracies in dose delivery may be significantly reduced.

In a further aspect, the present invention relates to a method of preparing a composition for radiation dosimetry, preferably a composition as defined herein, more preferably a hydrogel dosimeter composition, comprising
a) providing a solution comprising polyvinyl alcohol, optionally comprising magnesium chloride or glucose; wherein, optionally, said providing comprises providing water, said water optionally comprising magnesium chloride or glucose, wherein said water has a temperature in a range of from 70°C to 90°C, preferably in a range of from 75°C to 85°C, more preferably of about 80°C, and adding said polyvinyl alcohol thereto;
b) optionally, adjusting a temperature of said solution provided in step a) to a temperature in a range of from 40°C to 60°C, preferably to a temperature in a range of from 45°C to 55°C, more preferably to about 50°C;
c) adding N,N'-methylenebisacrylamide to said solution of step a) or b) to obtain a mixture comprising N,N'-methylenebisacrylamide;
d) optionally, adjusting a temperature of said mixture of step c) to a temperature in a range of from 30°C to 50°C, preferably in a range of from 35°C to 45°C, more preferably to about 40°C;
e) adding, optionally consecutively, acrylic acid, glutaraldehyde, and tetrakis(hydroxymethyl)phosphonium chloride to said mixture of step c) or d).

Advantageously, the composition produced by a method of the invention may be stored at room temperature. Particularly, the composition produced by a method of the invention is long-term storable at room temperature.

The terms "of the [present] invention", "in accordance with the invention", "according to the invention" and the like, as used herein are intended to refer to all aspects and embodiments of the invention described and/or claimed herein. As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by ±20%, ±15%, ±10%, and for example ±5%. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated. The term "about", as used herein in the context of numbers or data, intends to include deviations (±) which usually are to be considered in the respective technical field.

The composition of the invention may be used as radiation dosimeter in clinical radiation therapy, which requires reliable dosimetry, adequate precision, high-resolution maps of 3D dose distribution, and verification of the computer-generated treatment plans for radiotherapy. The composition of the invention was irradiated to a wide range of doses, e.g. from 1 to 60 Gy using a medical linear accelerator with dose rate of 600 cGymin⁻¹ and radiation beam energy of 6 MV. The composition of the invention may be polymerized by irradiation and the intensity of the polymerization may be measured, for example, via the positive changes in nuclear magnetic resonance (NMR) spin-spin relaxation rate (*R*₂) as well as the absorbance intensity. Advantageously, the composition of the invention exhibits a remarkable dose response, a high dose sensitivity, and a wide linear dose range. Moreover, the composition of the invention neither depends on the radiation beam energy nor on the dose rate. The composition of the invention may be used for quality assurance in medical radiation dosimetry. The composition of the invention comprises acrylic acid which polymerizes gradually with increasing absorbed dose. The invented composition may be provided in the form of a hydrogel and can be stored in room temperature before and after irradiation, while the conventional polymer gels have to be stored in low temperature to keep them from melting.

### BRIEF DESCRIPTION OF THE FIGURES

The present invention is now further described by reference to the following figures.

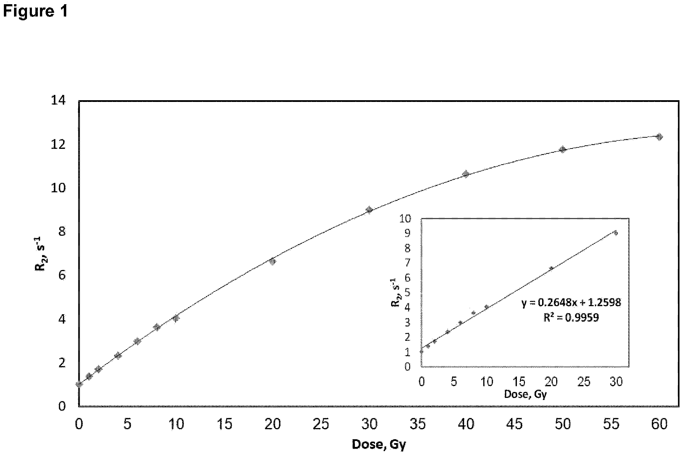

**Figure 1** shows the dose response of an exemplary composition of the invention. The change in the relaxation rate (R2) of an exemplary composition of the invention comprising magnesium chloride as a function of absorbed dose is shown. The more ionizing radiation exposed to the hydrogel, the higher is the polymerization degree and the more increased is the relaxation rate of the irradiated polymeric hydrogel. The efficiency of polymeric hydrogel samples was obtained from the dose sensitivity that is calculated from the slope of linear plot (up to 30 Gy) of relaxation rate versus dose (see inset). Advantageously, the composition of the invention has greatly enhanced dose sensitivity compared to previous polymer dosimeters, for example an exemplary composition of the invention comprising magnesium chloride has a dose sensitivity of 0.26 Gy⁻¹s⁻¹.

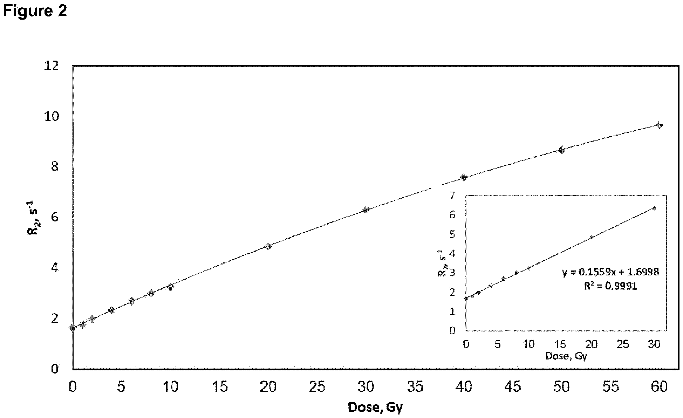

**Figure 2** shows the dose response of an exemplary composition of the invention. The change in the relaxation rate (R2) of an exemplary composition of the invention comprising glucose as a function of absorbed dose is shown. The more ionizing radiation exposed to the hydrogel, the higher is the polymerization degree and the more increased is the relaxation rate of the irradiated polymeric hydrogel. The efficiency of polymeric hydrogel samples was obtained from the dose sensitivity that is calculated from the slope of linear plot (up to 30 Gy) of relaxation rate versus dose (see inset). Advantageously, the composition of the invention has greatly enhanced dose sensitivity compared to previous polymer dosimeters, for example an exemplary composition of the invention comprising glucose has a dose sensitivity of 0.15 Gy ⁻¹s⁻¹.

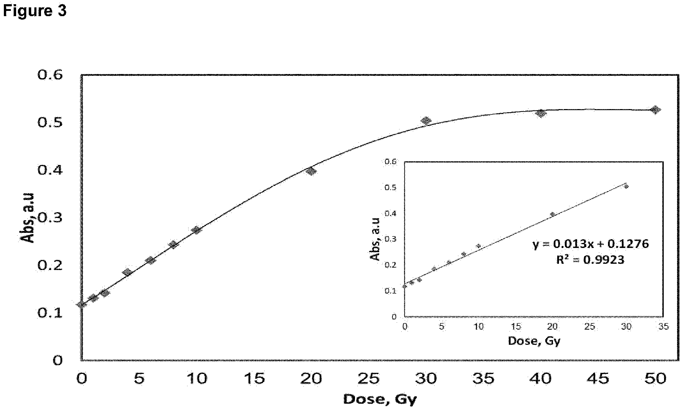

**Figure 3** shows a change in the absorbance of an exemplary composition of the invention comprising magnesium chloride as a function of the absorbed dose. The polymerization by irradiation resulted in a change of the color of the composition of the invention from transparent to white along the radiation beam. The degree of opacity intensity was used to represent the degree of polymerization, which is related directly to the absorbed dose. The absorption spectrum of an exemplary composition of the invention comprising magnesium chloride was obtained and the absorbance values were taken at 630 nm. The absorbance intensity values were plotted against absorbed doses up to 30 Gy.

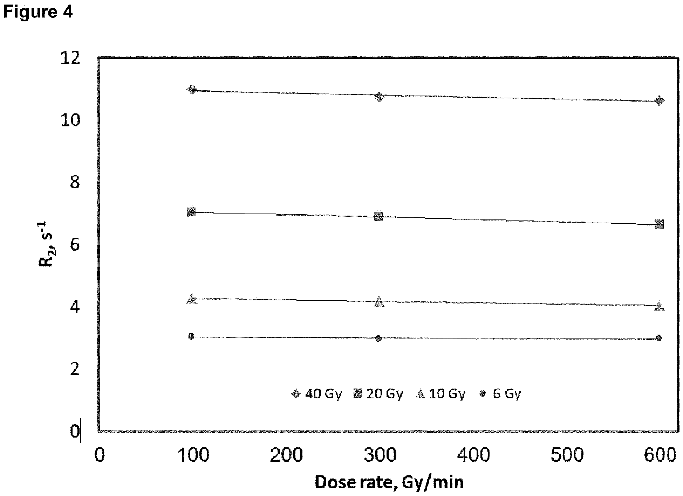

**Figure 4** shows the change in the relaxation rate (R2) of an exemplary composition of the invention comprising magnesium chloride as a function of the dose rate. A set of three samples was exposed for each selected dose and the average dose response in terms of relaxation rate was represented. Advantageously, no significant bulge in the relaxation rate of the composition due to the change of the dose-rate in the range from 100 to 600 cGymin⁻¹ is observed. Accordingly, the composition of the invention is highly useful for quality assurance of medical radiation dosimetry at any dose rate without a need to correct its response to the specific dose rate.

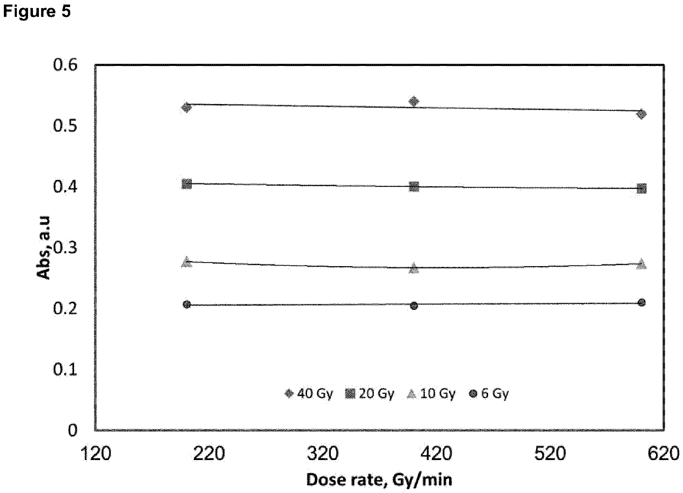

**Figure 5** shows the change in absorbance of an exemplary composition of the invention comprising magnesium chloride as a function of the dose rate. A set of three samples was exposed for each selected dose and the average dose response in terms of absorbance intensity was represented. Advantageously, the optical absorbance values at the selected doses did not significantly change with changing dose rates from 200 to 600 cGymin⁻¹. Thus, the composition of the invention is highly useful for quality assurance of medical radiation dosimetry at any dose rate without a need to correct its response to the specific dose rate.

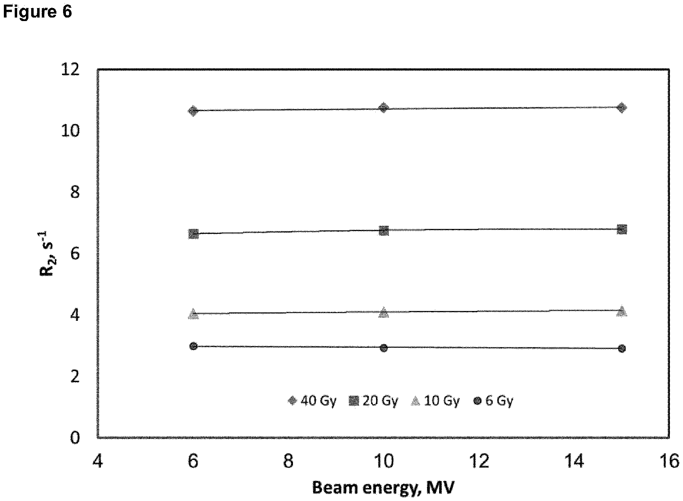

**Figure 6** shows the change in the relaxation rate (R2) of an exemplary composition of the invention comprising magnesium chloride as a function of radiation energy. Advantageously, the dose response is independent of the beam energies. Accordingly, the composition of the invention is highly useful for routine dose calibration in radiotherapy.

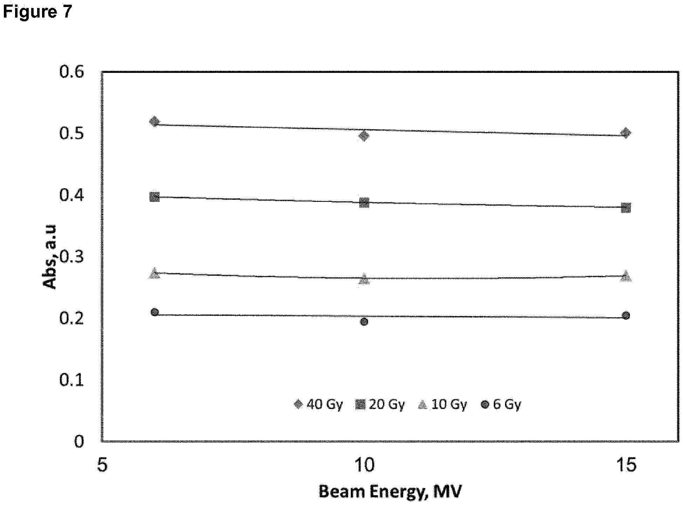

**Figure 7** shows the change in absorbance of an exemplary composition of the invention comprising magnesium chloride as a function of radiation energy. Advantageously, the dose response is independent of the beam energies. Accordingly, the composition of the invention is highly useful for routine dose calibration in radiotherapy.

All methods mentioned in the figure descriptions below were carried out as described in detail in the examples.

In the following, reference is made to the examples, which are given to illustrate, not to limit the present invention.

### EXAMPLES

### Example 1: Preparation of a composition of the invention

Exemplary dosimeter compositions of the invention, sometimes herein referred to "Acrylic Acid Polymer Hydrogel" or "ACAPHG", were fabricated under normal conditions. The ACAPHG composition comprises or consists of acrylic acid (ACA) monomer, polyvinyl alcohol (PVA) matrix, glutaraldehyde (GTA) cross-linking agent, N,N'-methylenebisacrylamide (BIS) co-monomer, tetrakis (hydroxymethyl) phosphonium chloride (THPC) antioxidant agent, magnesium chloride (MgCl₂) inorganic or D-(+)-Glucose organic sensitizing agent, and triple distilled water solvent. All high purity chemicals used were obtained from the Merck Group (St. Louis, Missouri, United States). Concentrations of two exemplary compositions of the invention are listed in Table 1 and Table 2.

ACAPHG gel was prepared as follows: magnesium chloride salt (to fabricate recipe of Table 1) or glucose (to fabricate recipe of Table 2) was added to triple distilled water at room temperature and magnetically stirred for about 30 min. After increasing the temperature of the solution to 80 °C, PVA powder was added and stirred continuously until a clear solution was obtained. Then, the temperature of the solution was reduced to about 50 °C, BIS powder was added and the solution was stirred for about one hour. Once the BIS was completely dissolved, the temperature of the hydrogel solution was cooled to about 40 °C, ACA, GTA and THPC were added one after the other, while the mixture was stirred between each of these additives for about 4-5 minutes. Then the fabricated hydrogel was transferred directly into air tight 10 ml NMR tubes (Wilmad glass, Buena, NJ, USA) and 3 ml cuvettes for magnetic and optical characterization. The hydrogel samples were kept in room temperature (about 22°C) before and after irradiation. In contrast thereto, the previous types of polymer gel dosimeters are typically kept in a refrigerator (10 °C) to set (i.e change from liquid state to gel state), and should always be stored in low temperature to keep it from melting. Advantageously, the composition of the invention, particularly the ACAPHG polymer dosimeter of the invention, can be transformed from liquid state to gelatinous state within few hours after preparation in room temperature. Moreover, the shelf-life of the composition of the invention, particularly the ACAPHG polymer dosimeter of the invention, lasts for a couple of months at room temperature in the dark.

**Table 1. Recipe of an exemplary composition of the invention with magnesium chloride.**

| **Chemicals** | Concentration (wt%) |
|---|---|
| Water | 82.2 |
| ACA | 0.5 |
| BIS | 3 |
| MgCl₂ | 8.5 |
| PVA | 5 |
| GTA | 0.5 |
| THPC | 0.3 |

**Table 2. Recipe of an exemplary composition of the invention with glucose.**

| Chemicals | Concentration (wt%) |
|---|---|
| Water | 65.7 |
| ACA | 0.5 |
| BIS | 3 |
| Glucose | 25 |
| PVA | 5 |
| GTA | 0.5 |
| THPC | 0.3 |

### Example 2: Analysis of a composition of the invention

The irradiation of the composition of the invention, particularly the hydrogel dosimeter, was carried out in NMR tubes and cuvettes one day after the preparation of the composition. To balance the samples' temperature with radiation room temperature, the hydrogel samples were transferred to the radiation room a few hours before irradiatiation to a wide range of doses from 1 to 60 Gy using x-ray beam of a medical linear accelerator (Varian Medical Systems, Palo Alto, Canada) at 6 MV photon beam energy and 600 cGy/min dose rate. Each hydrogel sample was irradiated in a water phantom (30×30×30 cm³) at 5 cm depth, 10×10 cm² field size and 100 cm source to surface distance. To study the effect of dose rate and beam energy on the performance of ACAPHG hydrogel samples, some samples were irradiated to 100, 200, 300, and 400 cGy/min at 6 MV, and other samples were exposed to different radiation beam energies (10 and 15 MV) at 600 cGy/min. At each dose point, a set of three samples was used and the median value of dose response was reported. After irradiation, the samples were stored at room temperature in the dark.

The changes in magnetic properties of the irradiated hydrogel (ACAPHG) samples in NMR tubes were assessed in terms of changing in the relaxation rate (R2) using 0.5 T NMR relaxometer (Minispec mq20, Bruker, Germany). The R2 values were obtained after applying Multi-Spin-Echo (Carr Purcell Meiboom Gill (CPMG) sequence with 0.5 ms echo time spacing and 2000 echoes. To reduce the influence of NMR scanning temperature, a thermostatic circulating water bath (Julabo, Germany) was connected to the NMR to control the scanning temperature (about 20±0.1 °C). One hour before NMR measurements, the NMR hydrogel samples were positioned in the thermostatic circulating water bath to equilibrate to controlled constant temperature. Three measurements for each MNR sample were taken and the median value of the measurements was reported. A standard NMR sample that supplied by Bruker Company was used to calibrate NMR relaxometer before scanning the hydrogel samples.

The changes in optical properties of the irradiated polymeric hydrogel (ACAPHG) samples filled in 3 ml cuvettes were evaluated in terms of the change in absorbance values using UV-vis spectrophotometer (Hitachi, Japan). The spectra of the irradiated as well as unirradiated hydrogels were obtained by scanning them in the wavelength ranging from 350 to 650 nm at room temperature (about 22°C), where the absorbance values were determined at 633 nm. For each cuvette sample, three measurements were read out and the average value of these readings was recorded. Calibration standard filters (1EA-8470F10, Thomas scientific, USA) were used to calibrate the spectrophotometer before measuring the hydrogel samples.

The dose response as well as dose sensitivity of the polymeric hydrogel (ACAPHG) dosimeters were evaluated to a wide range of absorbed doses (1-60 Gy). The changes in NMR signals representing the changes in relaxation rate (R2) of unirradiated and irradiated hydrogel with MgCl₂ (see Figure 1) and with glucose (see Figure 2) versus absorbed doses.

Without wishing to be bound by any theory, the inventors believe that ionizing radiation-induced dissociation of H₂O molecules in the composition leads to yielding a highly reactive species (ions and free radicals), and, as a result, free radical co-monomers are produced which initiate the polymerization reaction inside the hydrogel matrix.

The more ionizing radiation exposed to the hydrogel, the higher the polymerization degree and the more significantly increased the relaxation rate of the irradiated polymeric hydrogel (see Figures 1 and 2). The efficiency of the polymeric hydrogel (ACAPHG) samples was obtained from the dose sensitivity that is calculated from the slope of linear plot (up to 30 Gy) of the relaxation rate versus dose (see inset of Figure 1 and 2). It was found that, advantageously, the dose sensitivity values were more than 0.26 Gy⁻¹s⁻¹ for ACAPHG with MgCl₂ and 0.15 Gy⁻¹s⁻¹ for ACAPHG with glucose which are higher than values published for most of the conventional polymer dosimeters such as NIPAMGAT polymer gel (0.12 Gy⁻¹s⁻¹) and PAGAT polymer gel (0.09 Gy⁻¹s⁻¹). Advantageously, in addition to a wide linear range compared to conventional polymer gels, the composition of the invention has a high transparency before irradiation, and can be kept in room temperature, while other polymer gel compositions are not fully transparent (yellow color), and must be kept in refrigerators to keep them from melting.

As a result of the chemical change by the irradiation of the composition of the invention (polymerization), a physical change was observed as well. The color of the polymer gels changed from transparent to white along the radiation beam. The degree of opacity intensity was used to represent the degree of polymerization, which is related directly to the absorbed dose in the hydrogel dosimeter, e.g. determined using UV-vis spectrophotometer. The absorption spectra of hydrogel with MgCl₂ exposed to different doses were obtained and the absorbance values were taken at 630 nm. The absorbance intensity values were plotted against absorbed doses up to 30 Gy as seen in Figure 3. By increasing the absorbed dose inside the hydrogel, the optical absorbance values increase gradually, supporting the previous results in Figure 1. The optical dose sensitivity value was about (0.013 Gy⁻¹) as shown in the inset of Figure 3 which is less than that of the relaxation rate sensitivity calculated from the inset of Figure 1, indicating that the polymerization of hydrogel gives a NMR signal higher than the optical signal.

The dose-rate impact on the performance of polymeric hydrogel (e.g. ACAPHG with MgCl₂) dosimeter was investigated in the range of 100-600 cGymin⁻¹ at a fixed radiation beam energy of 6 MV. The samples were irradiated to doses of 6, 10, 20 and 40 Gy under similar radiation conditions which were used to obtain results in Figures 1 and 3. A set of three hydrogel samples was exposed for each selected dose and the average dose response in terms of relaxation rate or absorbance intensity was represented in Figures 4 and 5, respectively. The results in Figure 4 show no significant bulge in the relaxation rate of irradiated polymeric hydrogels due to the changing of dose-rate in the range from 100 to 600 cGymin⁻¹. The optical measurements also support the relaxometry measurement as shown in Figure 5, where the optical absorbance values at the selected dose almost did not change with changing dose rate from 200 to 600 cGymin⁻¹. Therefore, this invented hydrogel could be used for quality assurance of medical radiation dosimetry at any dose rate without needing to correct its response to a specific dose rate.

The radiation beam energy effect on the dose response of ACAPHG with MgCl₂ dosimeter was also conducted in this work. The most popular used radiation energy range (6-15 MV) in radiotherapy was selected with a fixed dose rate of 600 cGymin⁻¹. The hydrogel dosimeters (NMR tube samples and cuvette samples) were exposed to specific doses (6, 10, 20 and 40 Gy), and characterized after one day of irradiation via NMR relaxometer and spectrophotometer. The measurements of dose response of hydrogel samples were recorded from both techniques. The maximum value of coefficient of variation (CR) for relaxation rate data (see Figure 6), and absorbance intensity data (see Figure 7) was about (0.012) and (0.009), respectively. The independence of dose response as well as dose sensitivity on the megavoltage beam energies emphasizes the feasibility of using the invented polymeric hydrogel dosimeter for routine dose calibration in radiotherapy.

### REFERENCES

[1] Mattea, F., Chacón, D., Vedelago, J., Valente, M., & Strumia, M. C. 2015. Polymer gel dosimeter based on Itaconic acid. Applied Radiation and Isotopes, 105, 98-104
[2] Rabaeh, K.A., Basfar, A.A., Almousa, A.A., Devic, S.; Moftah, B. 2017. New normoxic N-(hydroxymethyl)acrylamide based polymer gel for 3D dosimetry in radiation therapy. Phys. Med., 33,121-126

The features of the present invention disclosed in the specification, the claims, and/or in the accompanying figures may, both separately and in any combination thereof, be material for realizing the invention in various forms thereof.

## Claims

1. A composition, preferably hydrogel composition, for radiation dosimetry, comprising
polyvinyl alcohol,
glutaraldehyde,
acrylic acid, and
N,N'-methylenebisacrylamide;
wherein, preferably, said composition comprises an antioxidant, preferably tetrakis(hydroxymethyl)phosphonium chloride;
wherein, optionally, said composition comprises magnesium chloride and/or glucose.

2. The composition according to claim 1, wherein said composition comprises
polyvinyl alcohol,
glutaraldehyde,
acrylic acid,
N,N'-methylenebisacrylamide,
water, and
an antioxidant, preferably tetrakis(hydroxymethyl)phosphonium chloride;
wherein, optionally, said composition comprises magnesium chloride and/or glucose.

3. The composition according to claim 1 or 2, wherein said composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%; and/or
water in an amount in a range of from 40 wt% to 95 wt%, preferably in a range of from 60 wt% to 90 wt%, more preferably in a range of from 64 wt% to 84 wt%.

4. The composition according to any one of the foregoing claims, wherein said composition comprises
magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%; or
glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

5. The composition according to any one of the foregoing claims, wherein said composition comprises
- water in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%; or
- water in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

6. The composition according to any one of the foregoing claims, wherein said composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%;
water in an amount in a range of from 70 wt% to 95 wt%, preferably in a range of from 75 wt% to 90 wt%, more preferably in a range of from 80 wt% to 85 wt%, even more preferably in a range of from 81 wt% to 83 wt%, such as about 82.2 wt%; and
magnesium chloride, preferably in an amount in a range of from 0.1 wt% to 12 wt%, more preferably in an amount in a range of from 4 wt% to 10 wt%, even more preferably in an amount in a range of from 8 wt% to 9 wt%, such as about 8.5 wt%;
or wherein said composition comprises
polyvinyl alcohol in an amount in a range of from 1 wt% to 10 wt%, preferably in a range of from 2 wt% to 8 wt%, more preferably in a range of from 3 wt% to 7 wt%, even more preferably in a range of from 4 wt% to 6 wt%, such as about 5 wt%;
glutaraldehyde in an amount in a range of from 0.1 wt% to 1 wt%, preferably in a range of from 0.2 wt% to 0.8 wt%, more preferably in a range of from 0.3 wt% to 0.7 wt%, even more preferably in a range of from 0.4 wt% to 0.6 wt%, such as about 0.5 wt%;
acrylic acid in an amount in a range of from 0.1 wt% to 10 wt%, preferably in a range of from 0.2 wt% to 1 wt%, more preferably in a range of from 0.3 wt% to 0.7 wt%, even more preferably in a range of from 0.4 wt% to 0.6 wt%, such as about 0.5 wt%;
N,N'-methylenebisacrylamide in an amount in a range of from 0.1 wt% to 7 wt%, preferably in a range of from 1 wt% to 5 wt%, more preferably in a range of from 2 wt% to 4 wt%, even more preferably in a range of from 2.5 wt% to 3.5 wt%, such as about 3 wt%;
an antioxidant, preferably tetrakis(hydroxymethyl)phosphonium chloride, in an amount in a range of from 0.05 wt% to 1 wt%, preferably in a range of from 0.1 wt% to 0.7 wt%, more preferably in a range of from 0.2 wt% to 0.5 wt%, even more preferably in a range of from 0.25 wt% to 0.35 wt%, such as about 0.3 wt%;
water in an amount in a range of from 50 wt% to 80 wt%, preferably in a range of from 55 wt% to 75 wt%, more preferably in a range of from 60 wt% to 70 wt%, even more preferably in a range of from 63 wt% to 68 wt%, such as about 65.7 wt%; and
glucose, preferably in an amount in a range of from 0.1 wt% to 50 wt%, more preferably in an amount in a range of from 15 wt% to 35 wt%, even more preferably in an amount in a range of from 20 wt% to 30 wt%, such as about 25 wt%.

7. The composition according to any one of the foregoing claims, wherein said composition is a hydrogel dosimeter composition; and/or
wherein said composition is formulated as a tissue-equivalent dosimeter.

8. The composition according to any one of the foregoing claims, wherein said composition does not comprise iron, particularly does not comprise ferrous ions; and/or wherein said composition does not comprise gelatin.

9. A composition according to any one of claims 1-8 for use in medicine; preferably for use in radiotherapy such as for use in a method of preventing or treating cancer; more preferably for use in radiation treatment planning, particularly for use in radiation treatment planning verification.

10. Use of a composition as defined in any one of claims 1-8 in radiation dosimetry, preferably in three-dimensional radiation dosimetry, more preferably in radiation treatment planning, wherein said use is an in vitro and/or ex vivo use.

11. A method of determining a three-dimensional radiation dose distribution, preferably a method of radiation treatment planning, particularly a method of radiation treatment planning verification, comprising
i) providing a composition as defined in any one of claims 1-8;
ii) optionally, analyzing a polymerization degree of said composition;
iii) irradiating said composition, preferably using ionizing radiation, more preferably using X-rays; preferably to a dose in a range of from 0.5 Gy to 60 Gy; optionally using a medical linear accelerator;
iv) analyzing a polymerization degree of said composition;
wherein, preferably, said analyzing a polymerization degree comprises nuclear magnetic resonance spectroscopy, optical computed tomography, X-ray computed tomography, ultraviolet-visible spectroscopy, magnetic resonance imaging, ultrasound, and/or Raman spectroscopy.

12. The method according to claim 11, wherein said analyzing a polymerization degree comprises analyzing a magnetic property of said composition, preferably using nuclear magnetic resonance spectroscopy, more preferably analyzing a relaxation rate of said composition using nuclear magnetic resonance spectroscopy, and/or comprises analyzing an optical property of said composition, preferably using ultraviolet-visible spectroscopy, more preferably analyzing an absorbance intensity of said composition using ultraviolet-visible spectroscopy.

13. The method according to claim 11 or 12, wherein said determining a three-dimensional radiation dose distribution comprises determining a dose response of said composition by analyzing a change in a relaxation rate of said composition using nuclear magnetic resonance spectroscopy, and/or by analyzing a change in an absorbance intensity of said composition using ultraviolet-visible spectroscopy;
wherein, preferably, said change is analyzed by comparing a relaxation rate and/or an absorbance intensity of said composition determined after irradiating said composition in step iii) to a relaxation rate and/or an absorbance intensity of a reference value and/or reference sample or to a relaxation rate and/or an absorbance intensity of said composition determined prior to irradiating said composition in step iii).

14. The method according to any one of claims 11 to 13, wherein said irradiating in step iii) is performed
at a dose rate in a range of from 10 cGy/min to 3000 cGy/min, preferably in a range of from 100 cGy/min to 800 cGy/min, more preferably in a range of from 200 cGy/min to 700 cGy/min, e.g. about 600 cGy/min; and/or
at a radiation beam energy in a range of from 1 MV to 25 MV, preferably in a range of from 4 MV to 15 MV, more preferably in a range of from 6 MV to 10 MV, e.g. about 6 MV.

15. A method of preparing a composition for radiation dosimetry, preferably a composition as defined in any one of claims 1 to 8, more preferably a hydrogel dosimeter composition, comprising
a) providing a solution comprising polyvinyl alcohol, optionally comprising magnesium chloride or glucose; wherein, optionally, said providing comprises providing water, optionally comprising magnesium chloride or glucose, wherein said water has a temperature in a range of from 70°C to 90°C, preferably in a range of from 75°C to 85°C, more preferably of about 80°C, and adding said polyvinyl alcohol thereto;
b) optionally, adjusting a temperature of said solution provided in step a) to a temperature in a range of from 40°C to 60°C, preferably to a temperature in a range of from 45°C to 55°C, more preferably to about 50°C;
c) adding N,N'-methylenebisacrylamide to said solution of step a) or b) to obtain a mixture comprising N,N'-methylenebisacrylamide;
d) optionally, adjusting a temperature of said mixture of step c) to a temperature in a range of from 30°C to 50°C, preferably in a range of from 35°C to 45°C, more preferably to about 40°C;
e) adding, optionally consecutively, acrylic acid, glutaraldehyde, and tetrakis(hydroxymethyl)phosphonium chloride.
